# EUROPEAN PATENT APPLICATION

(11) **EP 4 761 457 A1**
(43) Date of publication of application: **17.06.2026**
(21) Application number: 23947946.2
(22) Date of filing: 08.08.2023
(51) Int. Cl.: H04W 76/30, H04W 76/38, H04W 76/25

(54) **SIDELINK RADIO LINK FAILURE PROCESSING METHOD, APPARATUS AND SYSTEM**

(71) Applicant: 1FINITY INC., Kawasaki-shi, Kanagawa 211-8588 (JP)
(72) Inventor: LI, Guorong, Beijing 100022 (CN); YI, Su, Beijing 100022 (CN); JIA, Meiyi, Beijing 100022 (CN); WANG, Xin, Beijing 100022 (CN)
(74) Representative: Haseltine Lake Kempner LLP
(86) International application number: PCT/CN2023/111725
(87) International publication number: WO 2025/030367

(57) **Abstract**

Embodiments of the present disclosure provide a method, apparatus and system for processing a sidelink radio link failure, the method including: when a first remote device detects a sidelink radio link failure (SL RLF) for a second remote device or an upper layer in the first remote device requests to release a PC5 RRC connection between the first remote device and the second remote device, releasing a PC5 RRC connection or a PC5 unicast link or a PC5 RLC channel between the first remote device and a relay device; or retaining a PC5 RRC connection or a PC5 unicast link or a PC5 RLC channel between the first remote device and a relay device, and performing processing related to the radio link failure. Thereby, in a case where an end-to-end sidelink radio link failure occurs in UE-to-UE relay, a lower layer may be avoided from continuing to transmit data, radio resources of a sidelink may be avoided from wasting, and processing complexity and power consumption of a UE are reduced.

## Description

### TECHNICAL FIELD

The present disclosure relates to the field of communications.

### BACKGROUND

In release 18 (R18), UE to-UE relay (U2U relay) is being studied, the UE to-UE relay can expand coverage of sidelink transmission between two sidelink UEs and save power.

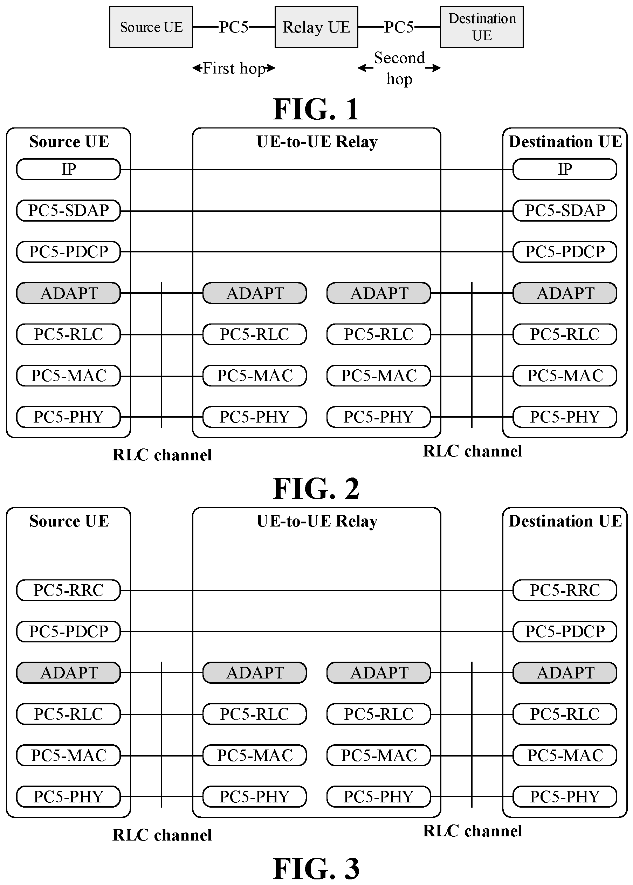

FIG. 1 is a schematic diagram of a scenario of UE-to-UE relay. As shown in FIG. 1, the scenario includes the following three situations:
all UEs (source UE, relay UE and destination UE) are within a network coverage range;
all UEs (source UE, relay UE and destination UE) are outside a network coverage range;
partial coverage, in which at least one UE (source UE, relay UE and destination UE) is within a network coverage range, and at least one UE (including source UE, relay UE and destination UE) is outside the network coverage range.

In study of R18 Layer-2 UE-to-UE relay (L2 U2U relay), it is agreed to use a user plane protocol stack as shown in FIG. 2 and a control plane protocol stack as shown in FIG. 3, in which an adaptation layer is introduced, such as ADAPT as shown in FIG. 2 and FIG. 3, or called a Sidelink Relay Adaptation Protocol (SRAP).

As shown in FIG. 2 and FIG. 3, on a link of a PC5 interface, the adaptation layer ADAPT is supported. In FIG. 2 (user plane protocol stack diagram), an IP layer, an SDAP layer and a PDCP layer are above the ADAPT layer, and an RLC layer, a MAC layer and a PHY layer are below the ADAPT layer. In FIG. 3 (control plane protocol stack diagram), the RRC layer and the PDCP layer are located above the ADAPT layer, and the RLC layer, the MAC layer and the PHY layer are located below the ADAPT layer. In FIG. 2 and FIG. 3, the ADAPT may be replaced by SRAP. In FIG. 2, the IP layer, the SDAP layer and the PDCP layer terminate between two remote UEs, while the RLC layer, the MAC layer and the PHY layer terminate in each PC5 link. In FIG. 3, the RRC layer and the PDCP layer terminate between two remote UEs, while the RLC layer, the MAC layer and the PHY layer terminate in each PC5 link.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

Inventor finds that according to existing UE behaviors related to SL RLF (sidelink radio link failure), in a U2U relay scenario, for example when the timer T400 for a peer remote device (e.g., called a second remote device) expires, or when a sidelink PDCP entity indicates integrity check failure concerning SL-SRB2 or SL-SRB3 for a peer remote device (e.g., called as a second remote device), a first remote device considers that a sidelink radio link failure (SL RLF) for a destination corresponding to the peer remote device or a radio link failure (PC5 RLF) of a PC5 interface is detected, or considers that an end-to-end sidelink radio link failure or a PC5 radio link failure is detected, thus relay reselection is triggered.

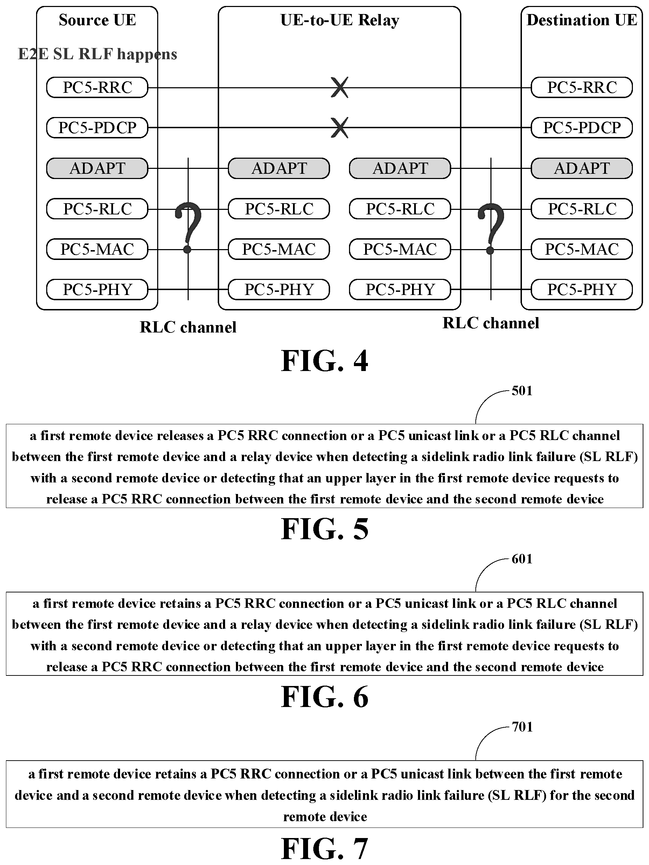

However, as shown in FIG. 4, when it is considered that an end-to-end PC5 RLF or SL RLF for a destination corresponding to the second remote device or a second remote UE (such as the destination UE in FIG. 4) is detected, the first remote device or a first remote UE (such as the source UE in FIG. 4) will release PC5 connection for the destination corresponding to the second remote device or the second remote UE, however whether to also release per-hop PC5-RRC connection/PC5 unicast link for a destination corresponding to a relay UE (such as the UE-to-UE relay in FIG. 4) is not clearly specified, thereby it may lead to service interruption, or cause a lower layer to continue transmitting data thereby resulting in resource waste or power consumption of a UE. In addition, a similar problem also exists in a case where the first remote device or the first remote UE is a destination UE and the second remote device or the second remote UE is a source UE.

For the above problems or other similar problems, the embodiments of the present disclosure provide a method, apparatus and system for processing sidelink radio link failure.

According to an aspect of the embodiments of the present disclosure, an apparatus for processing sidelink radio link failure is provided, configured in a first remote device, the apparatus comprising:
a processing unit, configured to release a PC5 RRC connection or a PC5 unicast link or a PC5 RLC channel between the first remote device and a relay device when detecting a sidelink radio link failure (SL RLF) for a second remote device or detecting that an upper layer in the first remote device requests to release a PC5 RRC connection between the first remote device and the second remote device.

According to another aspect of the embodiments of the present disclosure, an apparatus for processing sidelink radio link failure is provided, configured in a first remote device, the apparatus comprising:
a processing unit, configured to retain a PC5 RRC connection or a PC5 unicast link or a PC5 RLC channel between the first remote device and a relay device when detecting a sidelink radio link failure (SL RLF) for a second remote device or detecting that an upper layer in the first remote device requests to release a PC5 RRC connection between the first remote device and the second remote device.

According to a further aspect of the embodiments of the present disclosure, an apparatus for processing sidelink radio link failure is provided, configured in a relay device, the apparatus comprising:
a receiving unit, configured to receive indication information from a first remote device, the indication information indicating that an end-to-end sidelink radio link failure occurs;
a processing unit, configured to perform at least one of the following operations according to the indication information:
   stopping data transmission for a destination corresponding to a second remote device;
   considering that a sidelink radio link failure is detected for the destination corresponding to the second remote device;
   releasing a PC5 relay RLC channel or bearer or entity for the destination corresponding to the second remote device;
   discarding a NR sidelink communication related configuration related to the destination corresponding to the second remote device;
   resetting a sidelink specific MAC related to the destination corresponding to the second remote device;
   considering that a PC5-RRC connection for the destination corresponding to the second remote device is released;
   indicating an upper layer to release a PC5 unicast link for the destination corresponding to the second remote device; and
   indicating the upper layer that the PC5-RRC connection for the destination corresponding to the second remote device is released.

According to another aspect of the embodiments of the present disclosure, an apparatus for processing sidelink radio link failure is provided, configured in a first remote device, the apparatus comprising:
a processing unit, configured to retain a PC5 RRC connection or a PC5 unicast link between the first remote device and a second remote device when detecting a sidelink radio link failure (SL RLF) for the second remote device.

According to a further aspect of the embodiments of the present disclosure, a configuring apparatus is provided, configured in a network device, the apparatus comprising:
a configuring unit, configured to configure a third timer for a remote device, a value of the third timer being greater than a value of a timer T400, and the third timer being used for the remote device to perform sidelink related RRC reconfiguration.

According to a further aspect of the embodiments of the present disclosure, a configuring apparatus is provided, configured in a remote device in end-to-end relay (U2U relay), the apparatus comprising:
a setting unit, configured to set a value of a first timer T400 to be a value of a second timer T400 configured by a network device plus or multiplied by a first value; and
a processing unit, configured to start the first timer T400 when transmitting a sidelink RRC reconfiguration message.

According to a further aspect of the embodiments of the present disclosure, a configuring apparatus is provided, configured in a network device, the apparatus comprising:
a configuring unit, configured to configure a value range of a timer T400, wherein a second value in the value range is configured to a remote device in end-to-end relay (U2U relay).

One of advantageous effects of the embodiments of the present disclosure is: according to the embodiments of the present disclosure, in a case where an end-to-end sidelink radio link failure occurs in UE-to-UE relay, a lower layer may be avoided from continuing to transmit data, radio resources of a sidelink may be avoided from wasting, and processing complexity and power consumption of a UE are reduced.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of a scenario of UE-to-UE relay;
FIG. 2 is a schematic diagram of a user plane protocol stack of UE-to-UE relay;
FIG. 3 is a schematic diagram of a control plane protocol stack of UE-to-UE relay;
FIG. 4 is a schematic diagram of whether a connection between devices is released in a case where an end-to-end sidelink radio link failure occurs;
FIG. 5 is a schematic diagram of a method for processing sidelink radio link failure in the embodiments of the present disclosure;
FIG. 6 is another schematic diagram of a method for processing sidelink radio link failure in the embodiments of the present disclosure;
FIG. 7 is a further schematic diagram of a method for processing sidelink radio link failure in the embodiments of the present disclosure;
FIG. 8 is a schematic diagram of operation of a timer T400;
FIG. 9 is a schematic diagram of operation of a timer T400 in UE-to-UE relay;
FIG. 10 is a schematic diagram of a configuring method in the embodiments of the present disclosure;
FIG. 11 is another schematic diagram of a configuring method in the embodiments of the present disclosure;
FIG. 12 is a further schematic diagram of a configuring method in the embodiments of the present disclosure;
FIG. 13 is a schematic diagram of an apparatus for processing sidelink radio link failure in the embodiments of the present disclosure;
FIG. 14 is another schematic diagram of an apparatus for processing sidelink radio link failure in the embodiments of the present disclosure;
FIG. 15 is a further schematic diagram of an apparatus for processing sidelink radio link failure in the embodiments of the present disclosure;
FIG. 16 is a further schematic diagram of an apparatus for processing sidelink radio link failure in the embodiments of the present disclosure;
FIG. 17 is a schematic diagram of a configuring apparatus in the embodiments of the present disclosure;
FIG. 18 is another schematic diagram of a configuring apparatus in the embodiments of the present disclosure;
FIG. 19 is a further schematic diagram of a configuring apparatus in the embodiments of the present disclosure;
FIG. 20 is a schematic diagram of a communication system in the embodiments of the present disclosure;
FIG. 21 is a schematic diagram of a terminal equipment in the embodiments of the present disclosure;
FIG. 22 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Currently, the behaviors related to the sidelink radio link failure are defined in the Standard as follows:

| | | | | |
|---|---|---|---|---|
| 5.8.9.3 Sidelink radio link failure related actions | | | | |
| The UE shall: | | | | |
| | 1> upon indication from sidelink RLC entity that the maximum number of retransmissions for a specific destination has been reached; or | | | |
| | 1> upon T400 expiry for a specific destination; or | | | |
| | 1> upon indication from MAC entity that the maximum number of consecutive HARQ DTX for a specific destination has been reached; or | | | |
| | 1> upon integrity check failure indication from sidelink PDCP entity concerning SL-SRB2 or SL-SRB3 for a specific destination: | | | |
| | | 2> consider sidelink radio link failure to be detected for this destination; | | |
| | | 2> release the DRBs of this destination, according to clause 5.8.9.1a.1; | | |
| | | 2> release the SRBs of this destination, according to clause 5.8.9.1a.3; | | |
| | | 2> release the PC5 Relay RLC channels of this destination if configured, in according to clause 5.8.9.7.1; | | |
| | | 2> discard the NR sidelink communication related configuration of this destination; | | |
| | | 2> reset the sidelink specific MAC of this destination; | | |
| | | 2> consider the PC5-RRC connection is released for the destination; | | |
| | | 2> indicate the release of the PC5-RRC connection to the upper layers for this destination (i.e. PC5 is unavailable); | | |
| | | 2> if UE is in RRC_CONNECTED: | | |
| | | | 3> if the UE is acting as L2 U2N Remote UE for the destination: | |
| | | | | 4> initiate the RRC connection re-establishment procedure as specified in 5.3.7. |
| | | | 3> else: | |
| | | | | 4> perform the sidelink UE information for NR sidelink communication procedure, as specified in 5.8.3.3; |
| | NOTE: It is up to UE implementation on whether and how to indicate to upper layers to maintain the keep-alive procedure [55]. | | | |

In addition, for L2 UE-to-UE relay, 3GPP has the following agreements:

| | |
|---|---|
| | ∘ Proposal 7.1b (modified): Relay reselection triggers include at least 1) Upper layer trigger; 2) PC5-RLF detection at the remote UE; 3) PC5-RLF indication received from the relay; 4) PC5 signal strength conditions; 5) PC5 link release message from relay to remote. RAN2 further discuss details for trigger 4), potentially including T400 expiry. FFS if some of the conditions could be indicated to upper layer instead of directly causing reselection. |
| | ∘ Proposal 15: RAN2 does not agree T400 as a new relay reselection trigger because it is already considered when determining PC5 RLF to trigger relay reselection. |

It can be seen that, according to related arts, in a case that the sidelink radio link failure (SL RLF) occurs, a behavior of the UE is regarding to "a specific destination", and a condition under which the UE determines occurrence of the SL RLF is also regarding to "a specific destination". That is, according to existing UE behaviors related to the SL RLF, in a U2U relay scenario, for example when T400 for the second remote device expires or when a sidelink PDCP entity indicates integrity check failure concerning SL-SRB2 or SL-SRB3 for the second remote device, the first remote device will consider that SL RLF for a destination corresponding to the second remote device is detected, thus relay reselection will be triggered according to RAN2 agreements. However, in a case where the end-to-end PC5 RLF or SL RLF for a destination corresponding to the second remote device is detected, whether the first remote device also releases per-hop PC5-RRC connection/PC5 unicast link for a destination corresponding to a relay UE is not specified in the Standard.

For the above problem, the present disclosure is proposed. Various implementations of the present disclosure will be described below with reference to the drawings. These implementations are exemplary only and are not limitations to the present disclosure.

### Embodiments of a first aspect

Embodiments of the present disclosure provide a method for processing sidelink radio link failure, which is described from a first remote device side. The first remote device may be a source UE in a UE to-UE relay scenario, such as the source UE 11 in the scenario shown in FIG. 1, or may be a destination UE in the UE to-UE relay scenario, such as the destination UE 13 in the scenario shown in FIG. 1. Correspondingly, if the first remote device is a source UE in the UE to-UE relay scenario, the second remote device is a destination UE in the UE to-UE relay scenario, and if the first remote device is a destination UE in the UE to-UE relay scenario, the second remote device is a source UE in the UE-to-UE relay scenario.

FIG. 5 is a schematic diagram of a method for processing sidelink radio link failure in the embodiments of the present disclosure. Please refer to FIG. 5, the method comprises:
6 a first remote device releases a PC5 RRC connection or a PC5 unicast link or a PC5 RLC channel between the first remote device and a relay device when detecting a sidelink radio link failure (SL RLF) for a second remote device or detecting that an upper layer in the first remote device requests to release a PC5 RRC connection between the first remote device and the second remote device.

In the above embodiment, in a case where end-to-end SL RLF occurs in UE-to-UE relay or in a case where an upper layer requests to release PC5 RRC connection for a peer UE, the PC5 RRC connection or a PC5 unicast link or a PC5 RLC channel between the first remote device and the relay device is released, thereby a lower layer may be avoided from continuing to transmit data, radio resources of a sidelink may be avoided from wasting, processing complexity and power consumption of a UE are reduced.

In the above embodiment, the releasing the PC5 RRC connection or the PC5 unicast link or the PC5 RLC channel between the first remote device and the relay device may be: releasing a PC5 RRC connection or a PC5 unicast link for a destination (or destination L2 ID) of the relay device, or releasing a PC5 RRC connection or a PC5 unicast link of a pair of an L2 ID of the first remote device and an L2 ID of the relay device, or releasing a PC5 RRC connection corresponding to a PC5 unicast link between the first remote device and the relay device or releasing the PC5 unicast link.

In some embodiments, that the first remote device releases a PC5 RRC connection or a PC5 unicast link or a PC5 RLC channel between the first remote device and the relay device comprises at least one of the following (i.e., a behavior of release comprises at least one of the following):
considering that a sidelink radio link failure is detected for a destination corresponding to the relay device;
releasing a PC5 relay RLC channel or bearer or entity for the destination corresponding to the relay device;
discarding a NR sidelink communication related configuration related to the destination corresponding to the relay device;
resetting a sidelink specific MAC related to the destination corresponding to the relay device;
considering that a PC5-RRC connection for the destination corresponding to the relay device is released;
indicating an upper layer to release a PC5 unicast link for the destination corresponding to the relay device; and
indicating the upper layer that the PC5-RRC connection for the destination corresponding to the relay device is released.

In the above embodiments, the upper layer refers to a non-access stratum (NAS) or a V2X (Vehicle-to-everything) layer.

According to the above embodiments, relevant descriptions in the Protocol may be modified as follows:

| | | |
|---|---|---|
| The L2 U2U Remote UE shall: | | |
| | 1> upon T400 expiry for a specific destination; or | |
| | 1> upon integrity check failure indication from sidelink PDCP entity concerning SL-SRB2 or SL-SRB3 for a specific destination: | |
| | | 2> consider sidelink radio link failure to be detected for this destination; |
| | | 2> release the DRBs of this destination, according to clause 5.8.9.1a.1; |
| | | 2> release the SRBs of this destination, according to clause 5.8.9.1a.3; |
| | | 2> discard the NR sidelink communication related configuration of this destination; |
| | | 2> consider the PC5-RRC connection is released for the destination; |
| | | 2> indicate the release of the PC5-RRC connection to the upper layers for this destination (i.e. PC5 is unavailable); |
| | | 2> consider sidelink radio link failure to be detected for the destination of the relay UE; |
| | | 2> release the PC5 Relay RLC channels of the destination of the relay UE if configured, in according to clause 5.8.9.7.1; |
| | | 2> discard the NR sidelink communication related configuration of the destination of the relay UE; |
| | | 2> reset the sidelink specific MAC of the destination of the relay UE; |
| | | 2> consider the PC5-RRC connection is released for the destination of the relay UE; |
| | | 2> indicate the release of the PC5-RRC connection to the upper layers for the destination of the relay UE (i.e. PC5 is unavailable); |

In the above description, compared with the descriptions in existing Standard, relevant operations on a PC5 RLC channel and a MAC for a destination where SL RLF is detected (in this embodiment, the destination of the second remote device) are deleted (for example, releasing the PC5 RLC channel of the destination where SL RLF is detected and resetting a sidelink specific MAC of the destination where SL RLF is detected). In addition, according to the embodiments of the present disclosure, the UE may perform at least one of the operations in the above underlined text.

FIG. 6 is another schematic diagram of a method for processing sidelink radio link failure in the embodiments of the present disclosure. Please refer to FIG. 6, the method comprises:
601: a first remote device retains a PC5 RRC connection or a PC5 unicast link or a PC5 RLC channel between the first remote device and a relay device when detecting a sidelink radio link failure (SL RLF) for a second remote device or detecting that an upper layer in the first remote device requests to release a PC5 RRC connection between the first remote device and the second remote device.

In the above embodiment, in a case where end-to-end sidelink radio link failure occurs in UE-to-UE relay or in a case where an upper layer requests to release a PC5 RRC connection for a peer UE, the PC5 RRC connection or a PC5 unicast link or a PC5 RLC channel between the first remote device and the relay device is retained. Thereby, a lower layer may be avoided from continuing to transmit data, radio resources of a sidelink may be avoided from wasting, and processing complexity and power consumption of a UE are reduced.

In the above embodiment, the retaining the PC5 RRC connection or the PC5 unicast link or the PC5 RLC channel between the first remote device and the relay device may be: retaining a PC5 RRC connection or a PC5 unicast link for a destination (or destination L2 ID) of the relay device, or retaining a PC5 RRC connection or a PC5 unicast link of a pair of an L2 ID of the first remote device and an L2 ID of the relay device, or retaining a PC5 RRC connection corresponding to a PC5 unicast link between the first remote device and the relay device or retaining the PC5 unicast link.

In some embodiments, the first remote device considers that the relay device is a suitable relay device. For example, the first remote device reselects the relay device again through relay reselection.

In the above embodiments, the first remote device considers that the relay device is a suitable relay device, thereby the first remote device may retain the PC5 RRC connection or PC5 unicast link or PC5 RLC channel between the first remote device and the relay device.

In some other embodiments, the first remote device transmits indication information to the relay device, the indication information indicating that end-to-end sidelink radio link failure occurs.

In the above embodiments, the first remote device transmits indication information to the relay device, for indicating that end-to-end SL RLF occurs. For example, the first remote device may transmit the indication information in a case of detecting end-to-end sidelink radio link failure or in a case where an upper layer requests to release a PC5 RRC connection for a peer UE or after retaining the PC5 RRC connection or a PC5 unicast link or a PC5 RLC channel for the second remote device.

In the above embodiments, the indication information may be transmitted via a PC5-RRC message or PC5-S signaling (V2X layer signaling), etc. or an SL MAC CE or sidelink control information (SCI), etc., the present disclosure is not limited thereto.

In the above embodiments, the indication information may include a bit or a field to indicate that a failure cause is that SL RLF is detected for a destination of the second remote device or end-to-end SL RLF is detected, etc., the present disclosure is not limited thereto.

In the above embodiments, upon receiving the indication information, the relay device may perform at least one of the following operations:
stopping data transmission for a destination corresponding to a second remote device;
considering that a sidelink radio link failure is detected for the destination corresponding to the second remote device;
releasing a PC5 relay RLC channel or bearer or entity for the destination corresponding to the second remote device;
discarding a NR sidelink communication related configuration related to the destination corresponding to the second remote device;
resetting a sidelink specific MAC related to the destination corresponding to the second remote device;
considering that a PC5-RRC connection for the destination corresponding to the second remote device is released;
indicating an upper layer to release a PC5 unicast link for the destination corresponding to the second remote device; and
indicating the upper layer that the PC5-RRC connection for the destination corresponding to the second remote device is released, i.e., PC5 is unavailable.

That is, if the relay device receives indication information from the first remote device, and the indication information indicates that end-to-end sidelink radio link failure occurs, the relay device may perform at least one of the above operations.

In the above embodiments, behaviors of the first remote device are described.

In some embodiments, the first remote device considers that SL RLF for the second remote device is detected in the following situations, these situations comprising but not limited to:
a timer T400 for a destination corresponding to a second remote device expires; or,
a sidelink PDCP entity indicates integrity check failure concerning SL-SRB2 or SL-SRB3 for the destination corresponding to the second remote device.

That is, when a timer T400 for a destination corresponding to a second remote device expires or a sidelink PDCP entity indicates integrity check failure concerning SL-SRB2 or SL-SRB3 for the destination corresponding to the second remote device, the first remote device considers that a sidelink radio link failure for the second remote device is detected.

In some other embodiments, when receiving indication information (called second indication information) from the relay device and used for indicating a sidelink radio link failure between the first remote device and the second remote device, the first remote device considers that the sidelink radio link failure for the second remote device is detected. That is, the relay device informs the first remote device via the second indication information that the relay device detects SL RLF for the second remote device, at this point, the first remote device also considers that the sidelink radio link failure for the second remote device is detected.

In the above embodiments, SL RLF for the second remote device is detected, which may be that SL RLF for a destination (or destination L2 ID) corresponding to the second remote device is detected, or SL RLF of a pair of an L2 ID of the first remote device and an L2 ID of the second remote device is detected, or RLF of a PC5 unicast link for the second remote device is detected.

In the above embodiments, PC5 RRC connection for the second remote device is released, which may be that PC5 RRC connection is released for the destination (or destination L2 ID) corresponding to the second remote device, or PC5 RRC connection for a pair of the L2 ID of the first remote device and the L2 ID of the second remote device is released, or PC5 RRC connection corresponding to a PC5 unicast link for the second remote device is released.

Each of the above embodiments is only illustrative for the embodiments of the present disclosure, but the present disclosure is not limited to this, appropriate modifications may be further made based on the above each embodiment. For example, a triggering condition of each of the above embodiments may be used individually, or one or more of triggering conditions in each of the above embodiments may be combined.

According to the method in the embodiments of the present disclosure, in a case where end-to-end SL RLF occurs in UE-to-UE relay or in a case where an upper layer requests to release PC5 RRC connection for a peer UE, the PC5 RRC connection or a PC5 unicast link or a PC5 RLC channel between the first remote device and the relay device is retained or released, thereby a lower layer may be avoided from continuing to transmit data, radio resources of a sidelink may be avoided from wasting, processing complexity and power consumption of a UE are reduced.

### Embodiments of a second aspect

Embodiments of the present disclosure provide a method for processing sidelink radio link failure, which is described from a first remote device side.

FIG. 7 is a further schematic diagram of a method for processing sidelink radio link failure in the embodiments of the present disclosure, as shown in FIG. 7, the method comprises:
701: a first remote device retains a PC5 RRC connection or a PC5 unicast link between the first remote device and a second remote device when detecting a sidelink radio link failure (SL RLF) for the second remote device.

In SL RLF-related operations specified in the existing Standard, for a corresponding destination, a UE will release DRBs and SRBs, release PC5 RRC connection and indicate release of the PC5 RRC connection to an upper layer. In UE-to-UE relay, when the first remote device detects SL RLF for the second remote device, if the operations specified in the existing Standard are followed, DRBs and SRBs for a destination corresponding to the second remote device will be released, PC5-RRC connection for the destination corresponding to the second remote device will be released, and release of the PC5 RRC connection for the destination corresponding to the second remote device will be indicated to an upper layer. Therefore, services between the first remote device and the second remote device will be interrupted, resulting in inability to meet service QoS and reducing user experience.

For the above problem, according to the embodiments of the present disclosure, the first remote device retains or does not release a PC5 RRC connection or a PC5 unicast link between the first remote device and the second remote device when detecting the SL RLF for a second remote device. Thereby, a service establishment process of a PC5 interface may be omitted, which is conducive to faster recovery of service transmission with the second remote device. In addition, signaling overhead of RRC layer configurations is reduced, and a NAS layer is not required to establish a PC5 unicast link again.

In some embodiments, the first remote device further performs at least one of the following operations:
suspending a DRB of a second remote device or a relay device, for example suspending a DRB of a destination corresponding to the second remote device or relay device;
suspending an SRB of a second remote device or a relay device, for example suspending an SRB of a destination corresponding to the second remote device or relay device;
resetting a sidelink specific MAC of the second remote device or relay device, for example resetting a sidelink specific MAC of a destination corresponding to the second remote device or relay device;
configuring a PDCP layer to suspend integrity protection and encryption of the SRB, for example, configuring a PDCP layer to suspend integrity protection and encryption of an SRB of a destination corresponding to the second remote device or relay device;
starting a first timer;
starting a second timer; and
saving a configuration of an RRC layer and/or the PDCP layer, for example saving a configuration of an RRC layer and/or the PDCP layer of a destination corresponding to the second remote device or relay device.

In the above embodiments, the first timer is used for the first remote device and the second remote device to perform PC5 RRC connection reestablishment or recovery. For example, the first timer is started when performing PC5 RRC connection reestablishment or recovery, and the first timer is stopped when the PC5 RRC connection reestablishment or recovery is completed.

In the above embodiments, the second timer is used for the first remote device to perform relay device reselection. For example, the second timer is started when performing relay device reselection, and the second timer is stopped when the relay device reselection is completed, for example the second timer is stopped when a suitable relay device is reselected.

The above text only provides illustrative examples for the first timer and the second timer, the present disclosure is not limited thereto. During specific implementations, these two timers may further be used for other purposes and are started or stopped at appropriate timing as needed.

In some embodiments, the first remote device performs relay device reselection when detecting SL RLF for the second remote device, and stops the second timer when reselecting a relay device, for example when reselecting a suitable relay device.

In the above embodiments, the first remote device may further start the first timer when stopping the second timer, so as to perform PC5 RRC connection reestablishment or recovery.

In the above embodiments, the first remote device may possibly reselect a previous relay device or may possibly reselect a new relay device.

In some embodiments, the first remote device may perform PC5 RRC connection reestablishment or recovery with the second remote device, and perform at least one of the following operations when the PC5 RRC connection between the first remote device and the second remote device is reestablished or is successfully recovered:
stopping a first timer;
reestablishing a PDCP entity of a DRB and/or an SRB of the second remote device or relay device, for example reestablishing a PDCP entity of a DRB and/or an SRB of a destination corresponding to the second remote device or relay device;
reestablishing an RLC entity of a DRB and/or an SRB of the second remote device or relay device, for example reestablishing an RLC entity of a DRB and/or an SRB of a destination corresponding to the second remote device or relay device;
applying a configuration prior to SL-RLF, or applying a default configuration, or applying a predefined (i.e., specified) configuration, to a DRB and/or an SRB of the second remote device or relay device;
resuming a DRB and/or an SRB of the second remote device or relay device, for example resuming a DRB and/or an SRB of a destination corresponding to the second remote device or relay device;
generating at least one new key of the following: a key for sidelink SRB encryption of the second remote device or relay device, a key for sidelink SRB integrity protection of the second remote device or relay device, a key for sidelink DRB encryption of the second remote device or relay device, and a key for sidelink DRB integrity protection of the second remote device or relay device;
configuring a PDCP layer to resume integrity protection and encryption of an SRB of the second remote device or relay device.

In the above embodiments, the first remote device establishes a PC5-RRC connection for a reselected relay device, the second remote device also establishes a PC5-RRC connection for the reselected relay device, and after these two PC5-RRC connections are established, the first remote device may transmit a PC5-RRC message to the second remote device, such as an RRCReconfigurationSidelink message or an RRC reestablishment message on a sidelink, etc., and after a success response such as an RRCReconfigurationCompleteSidelink message or an RRC reestablishment completion message, etc., is received, it is considered that the PC5-RRC connection for the second remote device is successfully reestablished or is successfully recovered.

In some embodiments, if the first timer expires or the second timer expires or the reselected relay device is unsuitable or an upper layer (such as V2X layer) of the first remote device indicates to release the PC5 unicast link for the second remote device, the first remote device may further release the PC5 RRC connection for the second remote device.

In the above embodiments, that the first remote device releases the PC5 RRC connection for the second remote device may comprise at least one of the following operations:
considering that a sidelink radio link failure is detected for a destination corresponding to the relay device;
releasing a PC5 relay RLC channel or bearer or entity for the destination corresponding to the relay device;
discarding a NR sidelink communication related configuration related to the destination corresponding to the relay device;
resetting a sidelink specific MAC related to the destination corresponding to the relay device;
considering that a PC5-RRC connection for the destination corresponding to the relay device is released;
indicating an upper layer to release a PC5 unicast link for the destination corresponding to the relay device; and
indicating the upper layer that the PC5-RRC connection for the destination corresponding to the relay device is released.

In the above embodiments, the first remote device may further perform at least one of the following operations:
releasing a DRB of a destination corresponding to a second remote device;
releasing an SRB of a destination corresponding to a second remote device;
discarding a NR sidelink communication related configuration related to the destination corresponding to the second remote device;
considering that a PC5-RRC connection for the destination corresponding to the second remote device is released;
indicating an upper layer to release a PC5 unicast link for the destination corresponding to the second remote device; and
indicating the upper layer that the PC5-RRC connection for the destination corresponding to the second remote device is released, i.e., PC5 is unavailable.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the first remote device retains the PC5-RRC connection and the PC5 unicast link for the second remote device when detecting the SL RLF for the second remote device, a service establishment process of a PC5 interface may be omitted, which is conducive to faster recovery of service transmission with the second remote device. In addition, signaling overhead of RRC layer configurations is reduced, and a NAS layer is not required to establish a PC5 unicast link again.

### Embodiments of a third aspect

In the current 3GPP specification, the operations related to the timer T400 are specified as follows:

| | |
|---|---|
| **5.8.9.1.2 Actions related to transmission of *RRCReconfigurationSidelink* message** | |
| The UE shall set the contents of *RRCReconfigurationSidelink* message as follows: | |
| | ... |
| | 1> start timer T400 for the destination; |
| **5.8.9.1.8 Reception of an *RRCReconfigurationFailureSidelink* by the UE** | |
| The UE shall perform the following actions upon reception of the *RRCReconfigurationFailureSidelink:* | |
| | 1> stop timer T400 for the destination, if running; |
| **5.8.9.1.9 Reception of an *RRCReconfigurationCompleteSidelink* by the UE** | |
| The UE shall perform the following actions upon reception of the *RRCReconfigurationCompleteSidelink:* | |
| | 1> stop timer T400 for the destination, if running; |

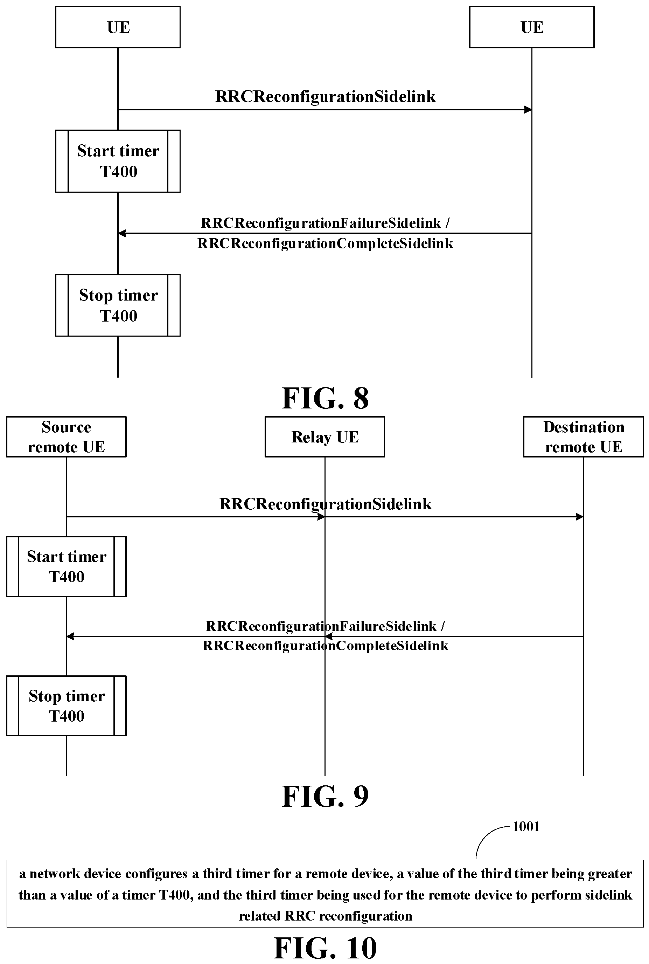

FIG. 8 is a schematic diagram of operation of a timer T400.

As shown in FIG. 8, the UE starts the timer T400 for a relevant destination when transmitting the RRCReconfigurationSidelink message. The UE stops the timer T400 for a relevant destination when receiving RRCReconfigurationFailureSidelink or RRCReconfigurationCompleteSidelink.

In addition, in the current specification, for a UE in the RRC_Idle/Inactive state, a value of T400 configured in SIB12 may be used; or for a UE in the RRC_Connected state, a value of T400 configured in the RRC reconfiguration message may be used; or for a UE that is out of coverage of a network, a value of T400 configured in pre-configuration may be used. A value range of T400 is 100 milliseconds, 200 milliseconds, 300 milliseconds, 400 milliseconds, 600 milliseconds, 1000 milliseconds, 1500 milliseconds and 2000 milliseconds.

The following is a configuration for the value range of T400 in the current specification:

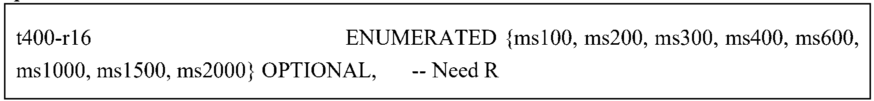

That is to say, the network device configures one value in the value range as a value of T400.

FIG. 9 is a schematic diagram of operation of a timer T400 in UE-to-UE relay. As shown in FIG. 9, for the first remote UE (source remote UE or destination remote UE), the RRCReconfigurationSidelink message, the RRCReconfigurationCompleteSidelink message or the RRCReconfigurationFailureSidelink message is transmitted via two hops, i.e., via the first remote UE (such as the source remote UE in the figure) to the relay UE (the first hop) and the relay UE to the second remote UE (such as the destination remote UE in FIG. 9) (the second hop), thus after the RRCReconfigurationSidelink is transmitted, the first remote UE might need more time to receive the RRCReconfigurationCompleteSidelink message or RRCReconfigurationFailureSidelink message transmitted by the second remote UE.

Therefore, if a value of T400 is configured to be relatively small, when the T400 expires, it is possible that the first remote UE transmitting the RRCReconfigurationSidelink has not received the RRCReconfigurationCompleteSidelink message or the RRCReconfigurationFailureSidelink message transmitted by the second remote UE, at this point, according to prior arts, the first remote UE transmitting the RRCReconfigurationSidelink will consider that SL RLF is detected and it will release the PC5-RRC connection, resulting in service interruption.

For the above problem, the embodiments of the present disclosure provide a configuring method.

FIG. 10 is a schematic diagram of a configuring method in the embodiments of the present disclosure, which is described from a network device side. As shown in FIG. 10, the method comprises:
1001: a network device configures a third timer for a remote device, a value of the third timer being greater than a value of a timer T400, and the third timer being used for the remote device to perform sidelink related RRC reconfiguration.

In the above embodiment, a value range of the third timer is different from that of the timer T400, for example the value range of the third timer is within the value range of the timer T400, and the value range of the third timer is the maximum N values in the value range of the timer T400, where N is a positive integer.

Still taking the value range of the T400 as an example, the value range of the third timer in the embodiments of the present disclosure may be {ms600, ms1000, ms1500, ms2000} in the above-mentioned range {ms100, ms200, ms300, ms400, ms600, ms1000, ms1500, ms2000}, i.e., N=4.

In the above embodiments, there are no restrictions on the configuring method for the third timer, moreover there are no restrictions on a name of the third timer either.

In some embodiments, for a remote device in an RRC idle state or inactive state (RRC_Idle/Inactive UE), a value of the third timer may be configured in SIB12; for a remote device in an RRC connected state (RRC_Connected UE), a value of the third timer may be configured in an RRC reconfiguration message; and for a remote device being out of coverage of a network, a value of the third timer may be configured in a pre-configuration. The present disclosure is not limited thereto, there may further be other configuring methods.

In some embodiments, the value of the third timer is configured for an identity of a source remote device (source remote UE) in remote devices, or is configured for an identity of a destination remote device (destination remote UE) in remote devices, or is configured for a pair of source remote device (source remote UE) identity and destination remote device (destination remote UE) identity.

In the above embodiments, the identity e.g. may be an L2 ID or a local ID, etc., the present disclosure is not limited thereto.

In some embodiments, both the third timer and the T400 are configured, the remote device determines to start the third timer or start the timer T400 when transmitting the RRCReconfigurationSidelink message according to whether communication for a peer remote device is performed via a relay device. For example, if the remote device communicates with the peer remote device via a relay device, the remote device starts the third timer, and if the remote device communicates directly with the peer remote device (not via a relay device), the remote device starts the timer T400.

In some embodiments, the third timer is configured and the T400 is not configured, and in case of communicating with the peer remote device via a relay device or communicating directly with the peer remote device (not via a relay device), the remote device starts the third timer when transmitting the RRCReconfigurationSidelink message.

According to the above embodiments, the network device configures a new timer (for example, called a third timer) to the remote UE. The value of the third timer is greater than that of T400, and the value range of the third timer may be different from that of T400. Thereby, the sidelink radio link failure caused due to that a set T400 value is not suitable for the UE-to-UE relay scenario is avoided, which is conducive to ensuring service quality requirements of sidelink communication, reducing service interruption and improving user experience.

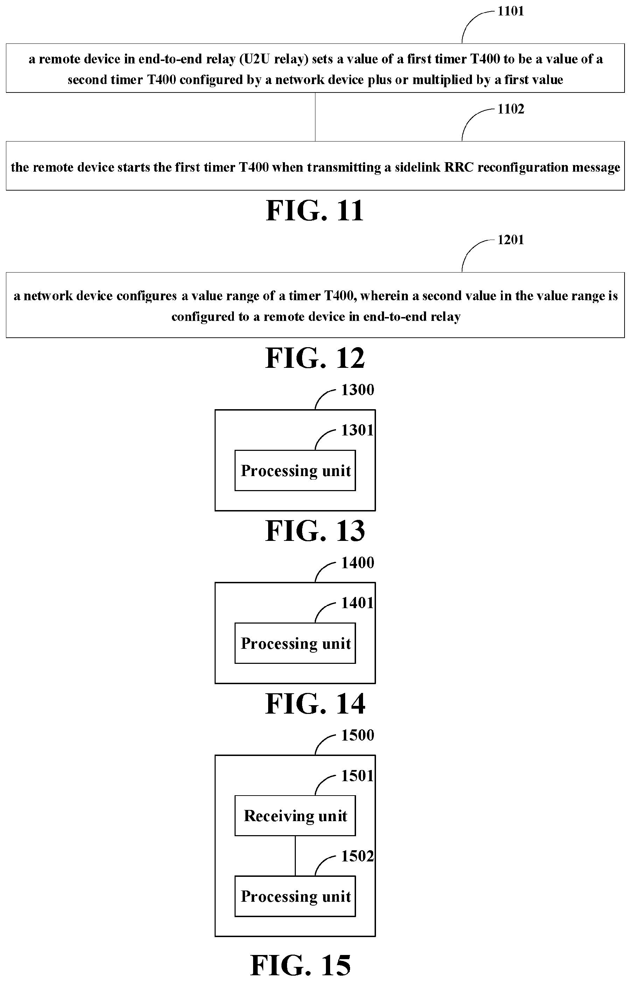

FIG. 11 is another schematic diagram of a configuring method in the embodiments of the present disclosure, which is described from a remote device side in end-to-end relay. As shown in FIG. 11, the method comprises:
1101: a remote device in end-to-end relay (U2U relay) sets a value of a first timer T400 to be a value of a second timer T400 configured by a network device plus or multiplied by a first value; and
1102: the remote device starts the first timer T400 when transmitting a sidelink RRC reconfiguration message.

In the above embodiment, unlike the embodiment in FIG. 10, the remote UE in U2U relay sets the value of the first timer T400 to be the value of the second timer T400 configured by the network plus or multiplied by the first value. Thereby, the sidelink radio link failure caused due to that a set T400 value is not suitable for the UE-to-UE relay scenario is avoided, which is conducive to ensuring service quality requirements of sidelink communication, reducing service interruption and improving user experience.

In the above embodiments, the first value is used to expand the value of the first timer T400 used by the remote UE in the U2U relay. In some embodiments, the first value is a positive integer, but in the present disclosure, there is no restriction on its specific value. Moreover, for the case of "plus the first value" and the case of "multiplied by the first value", the value of this first value may be the same or may be different.

In some embodiments, the first value is predefined, for example its value is 1000ms (for the case of "plus the first value") or 2 (for the case of "multiplied by the first value").

In some embodiments, the first value is configured by the network device.

For example, for a remote device in an RRC idle state or inactive state (RRC_Idle/Inactive UE), the first value is configured in SIB12; for a remote device in an RRC connected state (RRC_Connected UE), the first value is configured in an RRC reconfiguration message; and for a remote device being out of coverage of a network, the first value is configured in a pre-configuration.

For another example, the first value is configured for an identity of a source remote device (source remote UE) in remote devices, or is configured for an identity of a destination remote device (destination remote UE) in remote devices, or is configured for a pair of source remote device (source remote UE) identity and destination remote device (destination remote UE) identity.

The identity e.g. may be an L2 ID or a local ID, etc.

In some embodiments, the remote device, according to whether communication with a peer remote device is performed via a relay device, determines to start the first timer T400 or start the second timer T400 when transmitting the RRCReconfigurationSidelink message. For example, if the remote device communicates with the peer remote device via a relay device, the remote device starts the first timer T400, and if the remote device communicates directly with the peer remote device (not via a relay device), the remote device starts the second timer T400.

According to the above embodiments, the remote UE in U2U relay sets the value of the first timer T400 to be the value of the second timer T400 configured by the network plus or multiplied by the first value. Thereby, the sidelink radio link failure caused due to that a set T400 value is not suitable for the UE-to-UE relay scenario is avoided, which is conducive to ensuring service quality requirements of sidelink communication, reducing service interruption and improving user experience.

FIG. 12 is a further schematic diagram of a configuring method in the embodiments of the present disclosure, which is described from a network device side. As shown in FIG. 12, the method comprises:
1201: a network device configures a value range of a timer T400, wherein a second value in the value range is configured to a remote device in end-to-end relay (U2U relay).

In the above embodiment, the value of the second value e.g. is 1000 milliseconds, 1500 milliseconds or 2000 milliseconds.

According to the above embodiment, a specific value in the value range of the timer T400 is configured to the remote UE. Thereby, the sidelink radio link failure caused due to that a set T400 value is not suitable for the UE-to-UE relay scenario is avoided, which is conducive to ensuring service quality requirements of sidelink communication, reducing service interruption and improving user experience.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the sidelink radio link failure caused due to that a set T400 value is not suitable for the UE-to-UE relay scenario is avoided, which is conducive to ensuring service quality requirements of sidelink communication, reducing service interruption and improving user experience.

### Embodiments of a fourth aspect

Embodiments of the present disclosure provide an apparatus for processing sidelink radio link failure. The apparatus may, for example, be a terminal equipment, or may be one or more parts or components configured in the terminal equipment. The principle of the apparatus to solve the problem is same as the method in the embodiments of the first aspect, thus its specific implementation can refer to the implementation of the method in the embodiments of the first aspect, the same contents will not be repeated.

FIG. 13 is a schematic diagram of an apparatus for processing sidelink radio link failure in the embodiments of the present disclosure, taken that the apparatus is configured in a first remote device in a U2U relay scenario as an example. As shown in FIG. 13, the apparatus 1300 for processing sidelink radio link failure in the embodiments of the present disclosure comprises:
a processing unit 1301, configured to release a PC5 RRC connection or a PC5 unicast link or a PC5 RLC channel between the first remote device and a relay device when detecting a sidelink radio link failure (SL RLF) between a first remote device and a second remote device or detecting that an upper layer in the first remote device requests to release a PC5 RRC connection between the first remote device and the second remote device.

In some embodiments, that the processing unit 1301 releases a PC5 RRC connection or a PC5 unicast link or a PC5 RLC channel between the first remote device and a relay device comprises at least one of the following:
releasing a PC5 RRC connection or a PC5 unicast link for a destination corresponding to a relay device;
releasing a PC5 RRC connection or a PC5 unicast link of a pair of an L2 ID of the first remote device and an L2 ID of the relay device;
releasing a PC5 RRC connection corresponding to a PC5 unicast link between the first remote device and the relay device, or releasing the PC5 unicast link.

In some embodiments, that the processing unit 1301 releases a PC5 RRC connection or a PC5 unicast link or a PC5 RLC channel between the first remote device and a relay device comprises: the processing unit 1301 performs at least one of the following operations:
considering that a sidelink radio link failure is detected for a destination corresponding to the relay device;
releasing a PC5 relay RLC channel or bearer or entity for the destination corresponding to the relay device;
discarding a NR sidelink communication related configuration related to the destination corresponding to the relay device;
resetting a sidelink specific MAC related to the destination corresponding to the relay device;
considering that a PC5-RRC connection for the destination corresponding to the relay device is released;
indicating an upper layer to release a PC5 unicast link for the destination corresponding to the relay device; and
indicating the upper layer that the PC5-RRC connection for the destination corresponding to the relay device is released.

In the above embodiments, the upper layer includes a non-access stratum or a V2X (Vehicle-to-everything) layer.

FIG. 14 is another schematic diagram of an apparatus for processing sidelink radio link failure in the embodiments of the present disclosure, taken that the apparatus is configured in a first remote device in a U2U relay scenario as an example. As shown in FIG. 14, the relay selection or reselection apparatus 1400 in the embodiments of the present disclosure comprises:
a processing unit 1401, configured to retain a PC5 RRC connection or a PC5 unicast link or a PC5 RLC channel between the first remote device and a relay device when detecting a sidelink radio link failure (SL RLF) between a first remote device and a second remote device or detecting that an upper layer in the first remote device requests to release a PC5 RRC connection between the first remote device and the second remote device.

In some embodiments, that the first remote device retains a PC5 RRC connection or a PC5 unicast link or a PC5 RLC channel between the first remote device and a relay device comprises at least one of the following:
retaining a PC5 RRC connection or a PC5 unicast link for a destination corresponding to a relay device;
retaining a PC5 RRC connection or a PC5 unicast link of a pair of an L2 ID of the first remote device and an L2 ID of the relay device;
retaining a PC5 RRC connection corresponding to a PC5 unicast link between the first remote device and the relay device, or retaining the PC5 unicast link.

In some embodiments, the processing unit 1401 considers that the relay device is a suitable relay device.

In some embodiments, the processing unit 1401 transmits indication information to the relay device, the indication information indicating that end-to-end sidelink radio link failure occurs.

In the above embodiments, the first remote device may transmit the indication information in a case of detecting end-to-end sidelink radio link failure or in a case where an upper layer requests to release a PC5 RRC connection for the second remote device or after retaining the PC5 RRC connection or a PC5 unicast link or a PC5 RLC channel for the second remote device.

In the above embodiments, the indication information may include a bit or field for indicating a failure cause; the failure cause may include: an SL RLF or an end-to-end SL RLF is detected for the destination corresponding to the second remote device.

In the above embodiments, the indication information is used for the relay device to perform at least one of the following operations:
stopping data transmission for a destination corresponding to a second remote device;
considering that a sidelink radio link failure is detected for the destination corresponding to the second remote device;
releasing a PC5 relay RLC channel or bearer or entity for the destination corresponding to the second remote device;
discarding a NR sidelink communication related configuration related to the destination corresponding to the second remote device;
resetting a sidelink specific MAC related to the destination corresponding to the second remote device;
considering that a PC5-RRC connection for the destination corresponding to the second remote device is released;
indicating an upper layer to release a PC5 unicast link for the destination corresponding to the second remote device; and
indicating the upper layer that the PC5-RRC connection for the destination corresponding to the second remote device is released.

In the above embodiments, the indication information may be transmitted via a PC5-RRC message or PC5-S signaling or an SL MAC CE or sidelink control information (SCI).

In some embodiments, when a timer T400 for a destination corresponding to a second remote device expires or a sidelink PDCP entity indicates integrity check failure concerning SL-SRB2 or SL-SRB3 for the destination corresponding to the second remote device, the processing unit 1401 considers that a sidelink radio link failure between the first remote device and the second remote device is detected.

In some other embodiments, when receiving second indication information from the relay device and used for indicating a sidelink radio link failure between the first remote device and the second remote device, the processing unit 1401 considers that the sidelink radio link failure between the first remote device and the second remote device is detected.

FIG. 15 is a further schematic diagram of an apparatus for processing sidelink radio link failure in the embodiments of the present disclosure, taken that the apparatus is configured in a relay device in a U2U relay scenario as an example. As shown in FIG. 15, the apparatus comprises:
a receiving unit 1501, configured to receive indication information from a first remote device, the indication information indicating that an end-to-end sidelink radio link failure occurs;
a processing unit 1502, configured to perform at least one of the following operations according to the indication information:
   stopping data transmission for a destination corresponding to a second remote device;
   considering that a sidelink radio link failure is detected for the destination corresponding to the second remote device;
   releasing a PC5 relay RLC channel or bearer or entity for the destination corresponding to the second remote device;
   discarding a NR sidelink communication related configuration related to the destination corresponding to the second remote device;
   resetting a sidelink specific MAC related to the destination corresponding to the second remote device;
   considering that a PC5-RRC connection for the destination corresponding to the second remote device is released;
   indicating an upper layer to release a PC5 unicast link for the destination corresponding to the second remote device; and
   indicating the upper layer that the PC5-RRC connection for the destination corresponding to the second remote device is released.

It's worth noting that the above only describes components or modules related to the present disclosure, but the present disclosure is not limited thereto. The apparatuses 1300-1500 for processing sidelink radio link failure in the embodiments of the present disclosure may further comprise other components or modules. For detailed contents of these components or modules, relevant technologies may be referred to.

Moreover, for the sake of simplicity, FIG. 13 to FIG. 15 only exemplarily show a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation thereto.

According to the apparatuses in the embodiments of the present disclosure, a lower layer may be avoided from continuing to transmit data, radio resources of a sidelink may be avoided from wasting, and processing complexity and power consumption of a UE are reduced.

### Embodiments of a fifth aspect

Embodiments of the present disclosure provide an apparatus for processing sidelink radio link failure. The apparatus may, for example, be a terminal equipment, or may be one or more parts or components configured in the terminal equipment. The principle of the apparatus to solve the problem is same as the method in the embodiments of the second aspect, thus for its specific implementation, the implementation of the method in the embodiments of the second aspect may be referred to, the same contents will not be repeated.

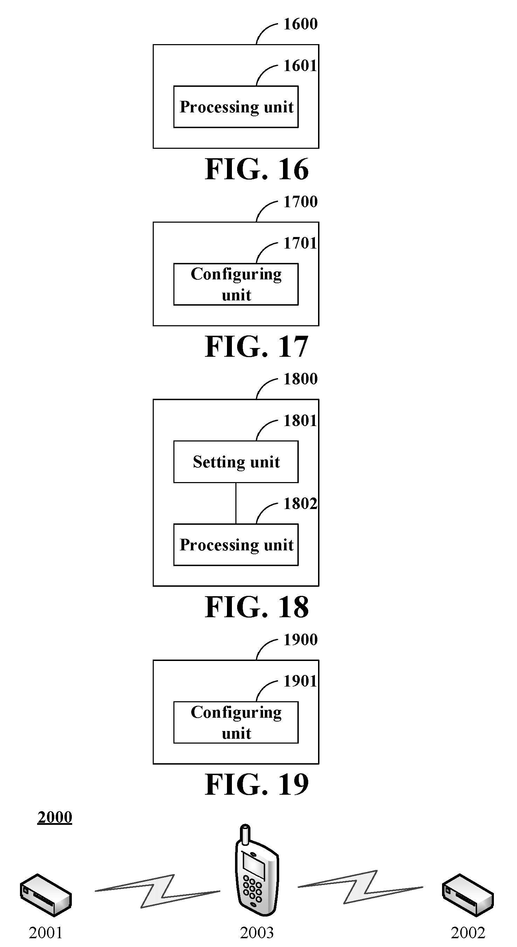

FIG. 16 is a further schematic diagram of an apparatus for processing sidelink radio link failure in the embodiments of the present disclosure, taken that the apparatus is configured in a first remote device in a U2U relay scenario as an example. As shown in FIG. 16, the apparatus 1600 for processing sidelink radio link failure in the embodiments of the present disclosure comprises:
a processing unit 1601, configured to retain a PC5 RRC connection or a PC5 unicast link between a first remote device and a second remote device when detecting a sidelink radio link failure (SL RLF) between the first remote device and the second remote device.

In some embodiments, the processing unit 1601 further performs at least one of the following operations:
suspending a DRB of the second remote device or relay device;
suspending an SRB of the second remote device or relay device;
resetting a sidelink specific MAC of the second remote device or relay device;
configuring a PDCP layer to suspend integrity protection and encryption of an SRB;
starting a first timer;
starting a second timer; and
saving a configuration of an RRC layer and/or a PDCP layer.

In some embodiments, the first timer is used for the first remote device and the second remote device to perform PC5 RRC connection reestablishment or recovery, and the second timer is used for the first remote device to perform relay device reselection.

In the above embodiments, the processing unit 1601 may further perform relay device reselection; and stop the second timer when reselecting a relay device.

In the above embodiments, the processing unit 1601 may further start the first timer when stopping the second timer.

In some embodiments, the processing unit 1601 further performs PC5 RRC connection reestablishment or recovery with the second remote device, and performs at least one of the following operations when the PC5 RRC connection between the first remote device and the second remote device is reestablished or is successfully recovered:
stopping a first timer;
reestablishing a PDCP entity of a DRB and/or an SRB of the second remote device or relay device;
reestablishing an RLC entity of a DRB and/or an SRB of the second remote device or relay device;
applying a configuration prior to SL-RLF, or applying a default configuration, or applying a predefined configuration, to a DRB and/or an SRB of the second remote device or relay device;
resuming a DRB and/or an SRB of the second remote device or relay device;
generating at least one new key of the following: a key for sidelink SRB encryption of the second remote device or relay device, a key for sidelink SRB integrity protection of the second remote device or relay device, a key for sidelink DRB encryption of the second remote device or relay device, and a key for sidelink DRB integrity protection of the second remote device or relay device;
configuring a PDCP layer to resume integrity protection and encryption of an SRB of the second remote device or relay device.

In some embodiments, the processing unit 1601 releases the PC5 RRC connection for the second remote device when the first timer expires or when the second timer expires or when a reselected relay device becomes inappropriate or when an upper layer of the first remote device indicates to release a PC5 unicast link for the second remote device.

In the above embodiments, that the processing unit 1601 releases the PC5 RRC connection for the second remote device comprises at least one of the following:
considering that a sidelink radio link failure is detected for a destination corresponding to the relay device;
releasing a PC5 relay RLC channel or bearer or entity for the destination corresponding to the relay device;
discarding a NR sidelink communication related configuration related to the destination corresponding to the relay device;
resetting a sidelink specific MAC related to the destination corresponding to the relay device;
considering that a PC5-RRC connection for the destination corresponding to the relay device is released;
indicating an upper layer to release a PC5 unicast link for the destination corresponding to the relay device; and
indicating the upper layer that the PC5-RRC connection for the destination corresponding to the relay device is released.

In some embodiments, the processing unit 1601 further performs at least one of the following operations:
releasing a DRB of a destination corresponding to the second remote device;
releasing an SRB of a destination corresponding to the second remote device;
discarding a NR sidelink communication related configuration related to the destination corresponding to the second remote device;
considering that a PC5-RRC connection for the destination corresponding to the second remote device is released;
indicating an upper layer to release a PC5 unicast link for the destination corresponding to the second remote device; and
indicating the upper layer that the PC5-RRC connection for the destination corresponding to the second remote device is released.

It's worth noting that the above only describes components or modules related to the present disclosure, but the present disclosure is not limited thereto. The apparatus 1600 for processing sidelink radio link failure in the embodiments of the present disclosure may further comprise other components or modules. For detailed contents of these components or modules, relevant technologies may be referred to.

Moreover, for the sake of simplicity, FIG. 16 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation thereto.

According to the apparatuses in the embodiments of the present disclosure, it is conducive to faster recovery of service transmission with the second remote device. In addition, signaling overhead of RRC layer configurations is reduced, and a NAS layer is not required to establish a PC5 unicast link again.

### Embodiments of a sixth aspect

Embodiments of the present disclosure provide a configuring apparatus. The apparatus may, for example, be a network device, or may be one or more parts or components configured in the network device; or the apparatus may be a terminal equipment, or one or more parts or components configured in the terminal equipment. The principle of the apparatus to solve the problem is same as the method in the embodiments of the third aspect, thus for its specific implementation, the implementation of the method in the embodiments of the third aspect may be referred to, the same contents will not be repeated.

FIG. 17 is a schematic diagram of a configuring apparatus in the embodiments of the present disclosure, taken that the apparatus is configured in a network device as an example. As shown in FIG. 17, the configuring apparatus 1700 in the embodiments of the present disclosure comprises:
a configuring unit 1701, configured to configure a third timer for a remote device, a value of the third timer being greater than a value of a timer T400, and the third timer being used for the remote device to perform sidelink related RRC reconfiguration.

In some embodiments, a value range of the third timer is different from a value range of the timer T400.

In some embodiments, the value range of the third timer is within the value range of the timer T400, and the value range of the third timer is N largest values in the value range of the timer T400.

In some embodiments, for a remote device in an RRC idle state or inactive state, the value of the third timer is configured in SIB12; and/or, for a remote device in an RRC connected state, the value of the third timer is configured in an RRC reconfiguration message; and/or, for a remote device being out of coverage of a network, the value of the third timer is configured in a pre-configuration.

In some embodiments, the value of the third timer is configured for an identity of a source remote device in remote devices, or is configured for an identity of a destination remote device in remote devices, or is configured for a pair of source remote device identity and destination remote device identity.

In the above embodiments, the identity is an L2 ID or a local ID.

FIG. 18 is another schematic diagram of a configuring apparatus in the embodiments of the present disclosure, taken that the apparatus is configured in a remote device in end-to-end relay (U2U relay) as an example. As shown in FIG. 18, the configuring apparatus 1800 in the embodiments of the present disclosure comprises:
a setting unit 1801, configured to set a value of a first timer T400 to be a value of a second timer T400 configured for a network device plus or multiplied by a first value; and
a processing unit 1802, configured to start the first timer T400 when transmitting a sidelink RRC reconfiguration message.

In some embodiments, the first value is a positive integer.

In some embodiments, the first value is predefined, or is configured by a network device.

For example, for a remote device in an RRC idle state or inactive state, the first value is configured in SIB12; and/or, for a remote device in an RRC connected state, the first value is configured in an RRC reconfiguration message; and/or, for a remote device being out of coverage of a network, the first value is configured in a pre-configuration.

In some embodiments, the first value is configured for an identity of a source remote device in remote devices, or is configured for an identity of a destination remote device in remote devices, or is configured for a pair of source remote device identity and destination remote device identity.

In the above embodiments, the identity is an L2 ID or a local ID.

FIG. 19 is a further schematic diagram of a configuring apparatus in the embodiments of the present disclosure, taken that the apparatus is configured in a network device as an example. As shown in FIG. 19, the configuring apparatus 1900 in the embodiments of the present disclosure comprises:
a configuring unit 1901, configured to configure a value range of a timer T400, wherein a second value in the value range is configured to a remote device in end-to-end relay (U2U relay).

In the above embodiment, the value of the second value is 1000 milliseconds, 1500 milliseconds or 2000 milliseconds.

It's worth noting that the above only describes components or modules related to the present disclosure, but the present disclosure is not limited thereto. The configuring apparatuses 1700 to 1900 in the embodiments of the present disclosure may further comprise other components or modules. For detailed contents of these components or modules, relevant technologies may be referred to.

Moreover, for the sake of simplicity, FIG. 17 to FIG. 19 only exemplarily show a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation thereto.

According to the apparatuses in the embodiments of the present disclosure, the sidelink radio link failure caused due to that a set T400 value is not suitable for the UE-to-UE relay scenario is avoided, which is conducive to ensuring service quality requirements of sidelink communication, reducing service interruption and improving user experience.

### Embodiments of a seventh aspect

Embodiments of the present disclosure provide a communication system. FIG. 20 is a schematic diagram of a communication system in the embodiments of the present disclosure. As shown in FIG. 20, the communication system 2000 comprises a first remote device 2001, a second remote device 2002 and a relay device 2003. For the sake of simplicity, FIG. 20 only takes one first remote device, one second remote device and one relay device as examples to describe, but the embodiments of the present disclosure are not limited thereto.

In the embodiments of the present disclosure, the first remote device 2001, the second remote device 2002 and the relay device 2003 are under a UE-to-UE relay scenario.

In some embodiments, the first remote device 2001 and the second remote device 2002 are configured to perform the method performed by the remote device in the embodiments of the first to third aspects; the relay device 2003 is configured to perform the method performed by the relay device in the embodiments of the first aspect. Since each method has been described in details in the embodiments of the first to third aspects, its contents are incorporated here and are omitted here.

In some embodiments, the communication system 200 further comprises a network device (not shown in the figure) which is configured to perform the method performed by the network device in the embodiments of the third aspect. Since the method performed by the network device has been described in details in the embodiments of the third aspect, its contents are incorporated here and are omitted here.

Embodiments of the present disclosure further provide a terminal equipment, the terminal equipment for example may be a source UE (first remote device) under a UE-to-UE relay scenario, or may be a destination UE (second remote device) under a UE-to-UE relay scenario, or may be a relay UE (relay device) under a UE-to-UE relay scenario, but the present disclosure is not limited thereto, it may also be other device.

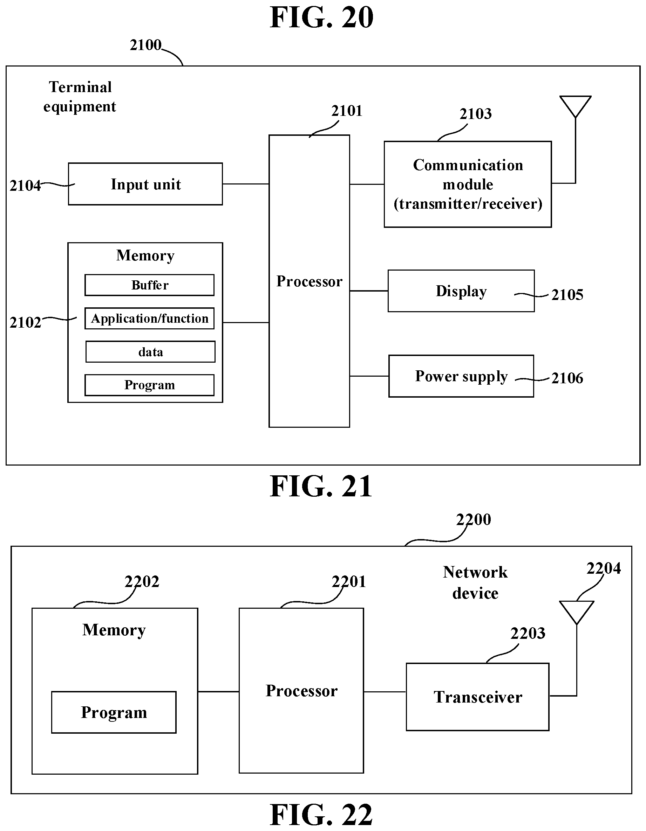

FIG. 21 is a schematic diagram of a terminal equipment in the embodiments of the present disclosure. As shown in FIG. 21, the terminal equipment 2100 may comprise a processor 2101 and a memory 2102; the memory 1102 stores data and programs, and is coupled to the processor 2101. It's worth noting that this figure is exemplary; other types of structures may also be used to supplement or replace this structure, so as to realize a telecommunication function or other functions.

For example, the processor 2101 may be configured to execute a program to implement the methods performed by the remote device or relay device described in the embodiments of the first aspect, the second aspect or the third aspect.

As shown in FIG. 21, the terminal equipment 2100 may further comprise: a communication module 2103, an input unit 2104, a display 2105 and a power supply 2106. The functions of said components are similar to related arts, which are not repeated here. It's worth noting that the terminal equipment 2100 does not have to include all the components shown in FIG. 21, said components are not indispensable. Moreover, the terminal equipment 2100 may further include components not shown in FIG. 21, related arts may be referred to.

Embodiments of the present disclosure further provide a network device.

FIG. 22 is a schematic diagram of a network device in the embodiments of the present disclosure. As shown in FIG. 22, the network device 2200 may comprise: a processor (such as a central processing unit (CPU)) 2201 and a memory 2202; the memory 2202 is coupled to the processor 2201. The memory 2202 may store various data; moreover, also stores a program for information processing, and executes the program under the control of the central processor 2201.

For example, the processor 2201 may be configured to execute a program to implement the method performed by a network device as described in the embodiments of the third aspect.

In addition, as shown in FIG. 22, the network device 2200 may further comprise: a transceiver 2203 and an antenna 2204, etc.; wherein the functions of said components are similar to related arts, which are not repeated here. It's worth noting that the network device 2200 does not have to include all the components shown in FIG. 22. Moreover, the network device 1600 may further comprise components not shown in FIG. 22, related arts may be referred to.

Embodiments of the present disclosure further provide a computer readable program, wherein when a terminal equipment executes the program, the program enables a computer to execute the methods performed by a remote device or relay device as described in the embodiments of the first to third aspects, in the terminal equipment.

Embodiments of the present disclosure further provide a storage medium in which a computer readable program is stored, wherein the computer readable program enables a computer to execute the methods performed by a remote device or relay device as described in the embodiments of the first to third aspects, in the terminal equipment.

Embodiments of the present disclosure further provide a computer readable program, wherein when a network device executes the program, the program enables a computer to execute the method performed by the network device as described in the embodiments of the third aspect, in the network device.

Embodiments of the present disclosure further provide a storage medium in which a computer readable program is stored, wherein the computer readable program enables a computer to execute the method performed by a network device as described in the embodiments of the third aspect, in the network device.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

Regarding the above implementations disclosed in this embodiment, the following supplements are further disclosed:
1. A method for processing sidelink radio link failure, applicable to a first remote device, wherein the method comprises:
   a first remote device releases a PC5 RRC connection or a PC5 unicast link or a PC5 RLC channel between the first remote device and a relay device when detecting a sidelink radio link failure (SL RLF) for a second remote device or detecting that an upper layer in the first remote device requests to release a PC5 RRC connection between the first remote device and the second remote device.
1a. The method according to supplement 1, wherein that the first remote device releases a PC5 RRC connection or a PC5 unicast link or a PC5 RLC channel between the first remote device and a relay device comprises at least one of the following:
   releasing a PC5 RRC connection or a PC5 unicast link for a destination corresponding to the relay device;
   releasing a PC5 RRC connection or a PC5 unicast link of a pair of an L2 ID of the first remote device and an L2 ID of the relay device;
   releasing a PC5 RRC connection corresponding to a PC5 unicast link between the first remote device and the relay device, or releasing the PC5 unicast link.
2. The method according to supplement 1, wherein,
   that the first remote device releases a PC5 RRC connection or a PC5 unicast link or a PC5 RLC channel between the first remote device and a relay device includes at least one of the following:
   considering that a sidelink radio link failure is detected for a destination corresponding to the relay device;
   releasing a PC5 relay RLC channel or bearer or entity for the destination corresponding to the relay device;
   discarding a NR sidelink communication related configuration related to the destination corresponding to the relay device;
   resetting a sidelink specific MAC related to the destination corresponding to the relay device;
   considering that a PC5-RRC connection for the destination corresponding to the relay device is released;
   indicating an upper layer to release a PC5 unicast link for the destination corresponding to the relay device; and
   indicating the upper layer that the PC5-RRC connection for the destination corresponding to the relay device is released.
3. The method according to supplement 2, wherein,
   the upper layer includes a non-access stratum or a V2X (Vehicle-to-everything) layer.
4. A method for processing sidelink radio link failure, applicable to a first remote device, wherein the method comprises:
   a first remote device retains a PC5 RRC connection or a PC5 unicast link or a PC5 RLC channel between the first remote device and a relay device when detecting a sidelink radio link failure (SL RLF) for a second remote device or detecting that an upper layer in the first remote device requests to release a PC5 RRC connection between the first remote device and the second remote device.
4a. The method according to supplement 4, wherein that the first remote device retains a PC5 RRC connection or a PC5 unicast link or a PC5 RLC channel between the first remote device and a relay device comprises at least one of the following:
   retaining a PC5 RRC connection or a PC5 unicast link for a destination corresponding to the relay device;
   retaining a PC5 RRC connection or a PC5 unicast link of a pair of an L2 ID of the first remote device and an L2 ID of the relay device;
   retaining a PC5 RRC connection corresponding to a PC5 unicast link between the first remote device and the relay device, or retaining the PC5 unicast link.
5. The method according to supplement 4, wherein the method further includes:
   the first remote device considers that the relay device is a suitable relay device.
6. The method according to supplement 4, wherein the method further comprises:
   the first remote device transmits indication information to the relay device, the indication information indicating that end-to-end sidelink radio link failure occurs.
6a. The method according to supplement 6, wherein,
   the first remote device transmits the indication information in a case of detecting end-to-end sidelink radio link failure or in a case where an upper layer requests to release a PC5 RRC connection for the second remote device or after retaining the PC5 RRC connection or a PC5 unicast link or a PC5 RLC channel for the second remote device.
6b. The method according to supplement 6, wherein,
   the indication information includes a bit or field for indicating a failure cause;
   the failure cause including: an SL RLF is detected for the destination corresponding to the second remote device or an end-to-end SL RLF is detected.
7. The method according to supplement 6, wherein the indication information is used for the relay device to perform at least one of the following operations:
   stopping data transmission for the destination corresponding to the second remote device;
   considering that a sidelink radio link failure is detected for the destination corresponding to the second remote device;
   releasing a PC5 relay RLC channel or bearer or entity for the destination corresponding to the second remote device;
   discarding a NR sidelink communication related configuration related to the destination corresponding to the second remote device;
   resetting a sidelink specific MAC related to the destination corresponding to the second remote device;
   considering that a PC5-RRC connection for the destination corresponding to the second remote device is released;
   indicating an upper layer to release a PC5 unicast link for the destination corresponding to the second remote device; and
   indicating the upper layer that the PC5-RRC connection for the destination corresponding to the second remote device is released.
8. The method according to claim 6, wherein,
   the indication information is transmitted via a PC5-RRC message or PC5-S signaling or an SL MAC CE or sidelink control information (SCI).
9. The method according to any one of supplements 1-8, wherein,
   when a timer T400 for a destination corresponding to the second remote device expires, or when a sidelink PDCP entity indicates integrity check failure concerning SL-SRB2 or SL-SRB3 for the destination corresponding to the second remote device, the first remote device considers that a sidelink radio link failure for the second remote device is detected.
10. The method according to any one of supplements 1-8, wherein,
   when receiving second indication information from the relay device and used for indicating that a sidelink radio link failure between the first remote device and the second remote device is detected, the first remote device considers that a sidelink radio link failure for the second remote device is detected.
11. A method for processing sidelink radio link failure, applicable to a relay device, wherein the method comprises:
   a relay device receives indication information from a first remote device, the indication information indicating that an end-to-end sidelink radio link failure occurs;
   the relay device performs at least one of the following operations according to the indication information:
      stopping data transmission for a destination corresponding to a second remote device;
      considering that a sidelink radio link failure is detected for the destination corresponding to the second remote device;
      releasing a PC5 relay RLC channel or bearer or entity for the destination corresponding to the second remote device;
      discarding a NR sidelink communication related configuration related to the destination corresponding to the second remote device;
      resetting a sidelink specific MAC related to the destination corresponding to the second remote device;
      considering that a PC5-RRC connection for the destination corresponding to the second remote device is released;
      indicating an upper layer to release a PC5 unicast link for the destination corresponding to the second remote device; and
      indicating the upper layer that the PC5-RRC connection for the destination corresponding to the second remote device is released.
12. A method for processing sidelink radio link failure, applicable to a first remote device, wherein the method comprises:
   a first remote device retains a PC5 RRC connection or a PC5 unicast link between the first remote device and the second remote device when detecting a sidelink radio link failure (SL RLF) for a second remote device.
13. The method according to supplement 12, wherein the method further includes:
   the first remote device performs at least one of the following operations:
   suspending a DRB of the second remote device or relay device;
   suspending an SRB of the second remote device or relay device;
   resetting a sidelink specific MAC of the second remote device or relay device;
   configuring a PDCP layer to suspend integrity protection and encryption of an SRB;
   starting a first timer;
   starting a second timer; and
   saving a configuration of an RRC layer and/or a PDCP layer.
14. The method according to supplement 13, wherein the first timer is used for the first remote device and the second remote device to perform PC5 RRC connection reestablishment or recovery, and the second timer is used for the first remote device to perform relay device reselection.
15. The method according to supplement 13, wherein the method further includes:
   the first remote device performs relay device reselection; and
   the first remote device stops the second timer when reselecting a relay device.
16. The method according to supplement 15, wherein the method further comprises:
   the first remote device starts the first timer when stopping the second timer.
17. The method according to supplement 13, wherein the method further comprises:
   the first remote device performs RC5 RRC connection reestablishment or recovery with the second remote device; and
   the first remote device performs at least one of the following operations when the PC5 RRC connection between the first remote device and the second remote device is reestablished or successfully recovered:
      stopping a first timer;
      reestablishing a PDCP entity of a DRB and/or an SRB of the second remote device or relay device;
      reestablishing an RLC entity of a DRB and/or an SRB of the second remote device or relay device;
      applying a configuration prior to SL-RLF, or applying a default configuration, or applying a predefined configuration, to a DRB and/or an SRB of the second remote device or relay device;
      resuming a DRB and/or an SRB of the second remote device or relay device;
      generating at least one new key of the following: a key for sidelink SRB encryption of the second remote device or relay device, a key for sidelink SRB integrity protection of the second remote device or relay device, a key for sidelink DRB encryption of the second remote device or relay device, and a key for sidelink DRB integrity protection of the second remote device or relay device;
      configuring a PDCP layer to resume integrity protection and encryption of an SRB of the second remote device or relay device.
18. The method according to any one of Supplements 13 to 17, wherein the method further comprises:
   the first remote device releases the PC5 RRC connection for the second remote device when the first timer expires or when the second timer expires or when a reselected relay device becomes inappropriate or when an upper layer of the first remote device indicates to release a PC5 unicast link for the second remote device.
19. The method according to supplement 18, wherein that the first remote device releases the PC5 RRC connection for the second remote device includes at least one of the following:
   considering that a sidelink radio link failure is detected for a destination corresponding to the relay device;
   releasing a PC5 relay RLC channel or bearer or entity for the destination corresponding to the relay device;
   discarding a NR sidelink communication related configuration related to the destination corresponding to the relay device;
   resetting a sidelink specific MAC related to the destination corresponding to the relay device;
   considering that a PC5-RRC connection for the destination corresponding to the relay device is released;
   indicating an upper layer to release a PC5 unicast link for the destination corresponding to the relay device; and
   indicating the upper layer that the PC5-RRC connection for the destination corresponding to the relay device is released.
20. The method according to supplement 18, wherein the method further includes:
   the first remote device performs at least one of the following operations:
   releasing a DRB of a destination corresponding to the second remote device;
   releasing an SRB of a destination corresponding to the second remote device;
   discarding a NR sidelink communication related configuration related to the destination corresponding to the second remote device;
   considering that a PC5-RRC connection for the destination corresponding to the second remote device is released;
   indicating an upper layer to release a PC5 unicast link for the destination corresponding to the second remote device; and
   indicating the upper layer that the PC5-RRC connection for the destination corresponding to the second remote device is released.
21. A configuring method, applicable to a network device, wherein the method comprises:
   a network device configures a third timer for a remote device, a value of the third timer being greater than a value of a timer T400, and the third timer being used for the remote device to perform sidelink related RRC reconfiguration.
22. The method according to supplement 21, wherein,
   a value range of the third timer is different from a value range of the timer T400.
23. The method according to supplement 21, wherein,
   the value range of the third timer is within the value range of the timer T400, and the value range of the third timer is N largest values in the value range of the timer T400.
24. The method according to any one of supplements 21-23, wherein,
   for the remote device that is in an RRC idle state or inactive state, the value of the third timer is configured in SIB12; and/or,
   for the remote device that is in an RRC connected state, the value of the third timer is configured in an RRC reconfiguration message; and/or,
   for the remote device that is out of network coverage, the value of the third timer is configured in a pre-configuration.
25. The method according to any one of supplements 21-24, wherein,
   the value of the third timer is configured for an identity of a source remote device in remote devices, or is configured for an identity of a destination remote device in remote devices, or is configured for a pair of source remote device identity and destination remote device identity.
26. The method according to supplement 25, wherein,
   the identity is an L2 ID or a local ID.
27. A configuring method, applicable to a remote device in end-to-end relay (U2U relay), wherein the method comprises:
   a remote device in end-to-end relay (U2U relay) sets a value of a first timer T400 to be a value of a second timer T400 configured by a network device plus or multiplied by a first value; and
   the remote device starts the first timer T400 when transmitting a sidelink RRC reconfiguration message.
28. The method according to supplement 27, wherein,
   the first value is a positive integer.
29. The method according to supplement 27, wherein,
   the first value is predefined, or is configured by a network device.
30. The method according to supplement 29, wherein,
   for the remote device that is in an RRC idle state or inactive state, the first value is configured in SIB12; and/or,
   for the remote device that is in an RRC connected state, the first value is configured in an RRC reconfiguration message; and/or,
   for the remote device that is out of network coverage, the first value is configured in a pre-configuration.
31. The method according to any one of supplements 27-30, wherein,
   the first value is configured for an identity of a source remote device in remote devices, or is configured for an identity of a destination remote device in remote devices, or is configured for a pair of source remote device identity and destination remote device identity.
32. The method according to supplement 31, wherein,
   the identity is an L2 ID or a local ID.
33. A configuring method, applicable to a network device, wherein the method comprises:
   a network device configures a value range of a timer T400, wherein a second value in the value range is configured to a remote device in end-to-end relay (U2U relay).
34. The method according to supplement 33, wherein,
   the value of the second value is 1000 milliseconds, 1500 milliseconds or 2000 milliseconds.
35. A terminal equipment, comprising a memory and a processor, the memory storing a computer program, and the processor being configured to execute the computer program to implement the method according to any one of supplements 1 to 20 and 27 to 32.
36. A network device, comprising a memory and a processor, the memory storing a computer program, and the processor being configured to execute the computer program to implement the method according to any one of supplements 21 to 26 and 33 to 34.
37. A communication system, comprising a first remote device, a second remote device and a relay device, wherein,
   the first remote device is configured to perform the method according to any one of supplements 1 to 10, 12 to 20 and 27 to 32;
   the relay device is configured to execute the method according to supplement 11;
   the second remote device is configured to perform end-to-end communication with the first remote device via the relay device.
38. The system according to supplement 37, wherein the system further comprises:
   a network device, configured to perform the method according to any one of supplements 21 to 26 and 33 to 34.

## Claims

1. An apparatus for processing a sidelink radio link failure, configured in a first remote device, wherein the apparatus comprises:
a processing unit configured to release a PC5 RRC connection or a PC5 unicast link or a PC5 RLC channel between the first remote device and a relay device when detecting a sidelink radio link failure (SL RLF) for a second remote device or detecting that an upper layer in the first remote device requests to release a PC5 RRC connection between the first remote device and the second remote device.

2. The apparatus according to claim 1, wherein,
that the processing unit releases a PC5 RRC connection or a PC5 unicast link or a PC5 RLC channel between the first remote device and a relay device comprises at least one of the following:
considering that a sidelink radio link failure is detected for a destination corresponding to the relay device;
releasing a PC5 relay RLC channel or a bearer or an entity for the destination corresponding to the relay device;
discarding a NR sidelink communication related configuration related to the destination corresponding to the relay device;
resetting a sidelink specific MAC related to the destination corresponding to the relay device;
considering that a PC5-RRC connection for the destination corresponding to the relay device is released;
indicating an upper layer to release a PC5 unicast link for the destination corresponding to the relay device; and
indicating the upper layer that the PC5-RRC connection for the destination corresponding to the relay device is released.

3. The apparatus according to claim 2, wherein,
the upper layer includes a non-access stratum or a V2X (Vehicle-to-everything) layer.

4. The apparatus according to claim 1, wherein,
when a timer T400 for a destination corresponding to the second remote device expires, or when a sidelink PDCP entity indicates integrity check failure concerning SL-SRB2 or SL-SRB3 for a destination corresponding to the second remote device, the processing unit considers that a sidelink radio link failure for the second remote device is detected.

5. The apparatus according to claim 1, wherein,
when receiving second indication information from the relay device and used for indicating that a sidelink radio link failure between the first remote device and the second remote device is detected, the processing unit considers that a sidelink radio link failure for the second remote device is detected.

6. An apparatus for processing a sidelink radio link failure, configured in a first remote device, wherein the apparatus comprises:
a processing unit configured to retain a PC5 RRC connection or a PC5 unicast link between the first remote device and a second remote device when detecting a sidelink radio link failure (SL RLF) for the second remote device.

7. The apparatus according to claim 6, wherein the processing unit performs at least one of the following operations:
suspending a DRB of the second remote device or a relay device;
suspending an SRB of the second remote device or a relay device;
resetting a sidelink specific MAC of the second remote device or a relay device;
configuring a PDCP layer to suspend integrity protection and encryption of an SRB;
starting a first timer;
starting a second timer; and
saving a configuration of an RRC layer and/or a PDCP layer.

8. The apparatus according to claim 7, wherein the first timer is used for the first remote device and the second remote device to perform PC5 RRC connection reestablishment or recovery, and the second timer is used for the first remote device to perform relay device reselection.

9. The apparatus according to claim 7, wherein,
the processing unit further performs relay device reselection; and
the processing unit stops the second timer when reselecting a relay device.

10. The apparatus according to claim 9, wherein,
the processing unit starts the first timer when stopping the second timer.

11. The apparatus according to claim 7, wherein,
the processing unit further performs RC5 RRC connection reestablishment or recovery with the second remote device;
the processing unit performs at least one of the following operations when a PC5 RRC connection between the first remote device and the second remote device is reestablished or successfully recovered:
stopping a first timer;
reestablishing a PDCP entity of a DRB and/or an SRB of the second remote device or a relay device;
reestablishing an RLC entity of a DRB and/or an SRB of the second remote device or a relay device;
applying a configuration prior to SL-RLF, or applying a default configuration, or applying a predefined configuration, to a DRB and/or an SRB of the second remote device or a relay device;
resuming a DRB and/or an SRB of the second remote device or a relay device;
generating at least one new key of the following: a key for sidelink SRB encryption of the second remote device or a relay device, a key for sidelink SRB integrity protection of the second remote device or a relay device, a key for sidelink DRB encryption of the second remote device or a relay device, or a key for sidelink DRB integrity protection of the second remote device or a relay device;
configuring a PDCP layer to resume integrity protection and encryption of an SRB of the second remote device or the relay device.

12. The apparatus according to claim 7, wherein,
the processing unit releases the PC5 RRC connection for the second remote device when the first timer expires or when the second timer expires or when a reselected relay device becomes unsuitable or when an upper layer of the first remote device indicates to release a PC5 unicast link for the second remote device.

13. The apparatus according to claim 12, wherein the processing unit releases the PC5 RRC connection for the second remote device, comprising at least one of the following:
considering that a sidelink radio link failure is detected for a destination corresponding to the relay device;
releasing a PC5 relay RLC channel or a bearer or an entity for the destination corresponding to the relay device;
discarding a NR sidelink communication related configuration related to the destination corresponding to the relay device;
resetting a sidelink specific MAC related to the destination corresponding to the relay device;
considering that a PC5-RRC connection for the destination corresponding to the relay device is released;
indicating an upper layer to release a PC5 unicast link for the destination corresponding to the relay device; and
indicating the upper layer that the PC5-RRC connection for the destination corresponding to the relay device is released.

14. The apparatus according to claim 12, wherein,
the processing unit further performs at least one of the following operations:
releasing a DRB of a destination corresponding to the second remote device;
releasing an SRB of a destination corresponding to the second remote device;
discarding a NR sidelink communication related configuration related to a destination corresponding to the second remote device;
considering that a PC5-RRC connection for a destination corresponding to the second remote device is released;
indicating an upper layer to release a PC5 unicast link for a destination corresponding to the second remote device; and
indicating the upper layer that the PC5-RRC connection for a destination corresponding to the second remote device is released.

15. A configuring apparatus, configured in a network device, wherein the apparatus comprises:
a configuring unit configured to configure a third timer for a remote device, a value of the third timer being greater than a value of a timer T400, and the third timer being used for the remote device to perform sidelink related RRC reconfiguration.

16. The apparatus according to claim 15, wherein,
a value range of the third timer is different from a value range of the timer T400.

17. The apparatus according to claim 15, wherein,
the value range of the third timer is within the value range of the timer T400, and the value range of the third timer is N largest values in the value range of the timer T400.

18. The apparatus according to claim 15, wherein,
for the remote device that is in an RRC idle state or an inactive state, the value of the third timer is configured in SIB12; and/or,
for the remote device that is in an RRC connected state, the value of the third timer is configured in an RRC reconfiguration message; and/or,
for the remote device that is out of network coverage, the value of the third timer is configured in a pre-configuration.

19. The apparatus according to claim 15, wherein,
the value of the third timer is configured for an identity of a source remote device in the remote device, or is configured for an identity of a destination remote device in the remote devices, or is configured for a pair of source remote device identity and destination remote device identity.

20. The apparatus according to claim 19, wherein,
the identity is an L2 ID or a local ID.
